# EUROPEAN PATENT SPECIFICATION

(11) **EP 0 794 476 B1**
(45) Date of publication and mention of the grant of the patent: **27.09.2000**
(21) Application number: 96203425.2
(22) Date of filing: 03.12.1996
(51) Int. Cl.: G05D 11/13, G01G 19/32

(54) **Device for gravimetric metering of a mixture**
Vorrichtung zur gravimetrischen Dosierung eines Gemisches
Appareil pour le dosage gravimétrique d'un mélange

(30) Priority: 06.12.1995 NL 1001835
(43) Date of publication of application: 10.09.1997
(73) Proprietor: ALFRA DOSEER- EN WEEGSYSTEMEN B.V., 5531 AJ Bladel (NL)
(72) Inventor: van den Boom, Lambertus Joseph Maria, 5061 NH Oisterwijk (NL)
(74) Representative: Brookhuis, Hendrik Jan Arnold

(56) References cited:
- US-A- 4 733 971
- PATENT ABSTRACTS OF JAPAN vol. 11, no. 178 (P-584), 9 June 1987 & JP 62 009226 A (KAWASAKI STEEL CORP.), 17 January 1987,
- PATENT ABSTRACTS OF JAPAN vol. 13, no. 107 (C-576), 14 March 1989 & JP 63 283733 A (FUJI PHOTO FILM CO), 21 November 1988,
- PATENT ABSTRACTS OF JAPAN vol. 12, no. 280 (P-739), 2 August 1988 & JP 63 061120 A (NGK INSULATORS LTD), 17 March 1988,

## Description

The present invention relates to a device for gravimetric metering of a mixture of several components according to the preamble of claim 1.

Such a device is known from US 4 733 971. This known device is designed for metering the components of a mixture of feed additives for animals. The known device comprises a row of stock containers, each containing one of the additives. An elongated second collection container extends below the outflow openings of these stock containers. The second collection container is divided into compartments, each compartment extending below a corresponding stock container. When a mixture is metered the additives are fed into the second collection container sequentially and the weight is determined as a cumulative of the weights of the different additives.

The known device has the disadvantage that the second weighing means, which measure the weight of the additives fed into the second collection container, are necessarily of an expensive design and special measures need to be taken to isolate the second weighing means from its support. Furthermore the second weighing means need to be placed in a conditioned environment in order to obtain accurate measurements. This will be explained below.

As is mentioned in US 4 733 971 some of the additives are metered in very small amounts, e.g. grams. The weight of the unloaded second collection container will in practice be many times the weight of one of the additives to be metered. The second weighing means are therefore always loaded by the weigth of the second collection container and then have to be able to weigh accurately the comparatively very small additional weight of the additives. Also the centre of gravity of the additives fed into the second collection container will vary with the composition of the mixture. It is e.g. possible that additives are only fed into the compartments of the second collection container located on one end thereof. The second weighing means must be able to determine the weight of the additives without there being an essentially fixed centre of gravity of the additives in the second collection container. Weighing means which are actually capable of doing this are generally very expensive or require conditioned circumstances for a reliable operation. A particular drawback of the known device therefore is that the number of stock containers for the additives cannot be expanded without providing even more expensive second weighing means.

The object of the present invention is to solve the abovementioned problem.

To this end, the invention provides a device according to the preamble of claim 1, which is characterized in that the second collection container is movable below the outflow openings of the stock containers.

In the device according to the present invention the second collection container can be placed directly below the outflow opening of a stock container from which a relatively low weight of a component of the mixture is being delivered. In comparison with the known device the size of the second collection container can be much smaller and the weight of the second collection container can be reduced. Another advantage is that the number of stock containers can be expanded without altering the second collection container or the second weighing means.

The first collection container and the second collection container are preferably accommodated in a common frame, which is movable along a path below the outflow openings of the stock containers. The path along which the two collection containers are movable can be, for example, a straight line or a more or less freely definable path between two successive positions of the collection container concerned, which can be achieved by, for example, a X-Y displacement mechanism.

It is also preferable for the first collection container to be designed such that it extends below several outflow openings of different stock containers, and for the second collection container to be designed such that it extends below a smaller number, for example one, of the outflow openings, the second collection container being movable relative to the first collection container, so that the second collection container can be placed below a desired outflow opening without moving the first collection container. This gives great flexibility and efficiency when constantly changing mixtures have to be made.

In an embodiment which is very advantageous in practice, the second collection container can swivel about a swivel shaft situated above the first collection container, the second collection container having two collection compartments arranged bottom-to-bottom, each having at the side facing away from the other collection compartment an opening for receiving and delivering a component, while an arm connects the second collection container to the swivel shaft, so that the second collection container can be swivelled between a first receiving position for receiving a component from a first outflow opening and a second receiving position for receiving a component from a second outflow opening, and the contents of a collection compartment are delivered to the first collection container during the swivelling from one receiving position to the other receiving position.

Further advantageous embodiments are described in the claims and the description which follows, in which the invention will be explained in greater detail with reference to an exemplary embodiment of the device according to the invention shown in the single figure of the drawing.

The device shown diagrammatically in the drawing for gravimetric metering of a mixture of several components comprises a large number of stock containers placed next to each other in a single row, only four of which are shown. These stock containers are indicated by the reference numbers 1, 2, 3 and 4 respectively.

Each stock container 1, 2, 3, 4 contains one of the components from which many different mixtures can be compounded using the device according to the invention.

Each stock container has an outflow opening which can be controlled by a controllable valve 5, 6, 7 and 8 respectively, for delivering a metered quantity of the component concerned. A control device 9 is provided for controlling the valves 5, 6, 7, 8.

The device also comprises a first collection container 10, for receiving components from the stock containers 1 - 4. The first collection container 10 is accommodated in a frame 11, which is movable along a path below the outflow openings of the stock containers 1 - 4. The frame 11 in this example is placed by means of runners on two parallel rails 12, forming the path which in this example is straight. Due to the fact that the first collection container 10 can be moved below the outflow openings of the stock containers, said collection container can be made relatively small and can consequently have a low unloaded weight. The low unloaded weight of the first collection container 10 improves the accuracy of determination of the weight of the contents of that collection container 10.

First weighing means are provided for determining the weight of the contents of the first collection container 10. In this example said first weighing means comprise three load cells 13 in a triangular arrangement around the first collection container 10. One load cell 13 can be seen in the drawing.

The first collection container 10 rests by way of the three load cells 13 on the frame 11. The load cells 13 are connected to an electrical unit 14, which converts the signals of the load cells 13 into a signal which represents the weight of the contents of the first collection container 10.

According to the present invention, a second collection container 15 is also provided, which container clearly has a smaller volume than the first collection container 10. The second collection container 15 is likewise accommodated in the frame 11, so that the second collection container 15 can also be moved below the outflow openings of the stock containers 1 - 4.

It can be seen clearly in the drawing that the second collection container 15 is situated above the first collection container 10. The second collection container 15 can receive one or more components from the stock containers, but in considerably smaller volume than the much larger first collection container 10. The second collection container 15 is designed for delivering the contents of the second collection container 15 to the first collection container 10, for compounding the desired mixture.

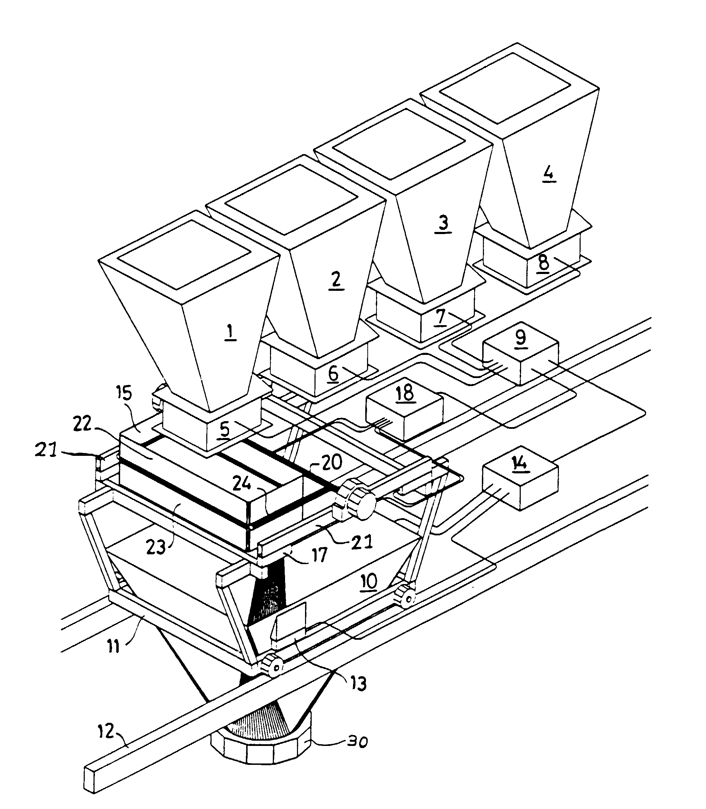

Second weighing means are provided for determining the weight of the contents of the second collection container 15. In this example the second weighing means comprise four electronic load cells 17, three of which can be seen in Figure 1. The second collection container 15 rests directly on the frame 11 by way of the four load cells 17. The load cells 17 are connected to a second electrical signal processing unit 18, which converts the signals of the load cells 17 into a signal which represents the weight of the contents of the second collection container 15.

Both the unit 14 and the unit 18 are connected to the control device 9, which operates the valves of the stock containers, so that automatic metering of the components can be achieved.

It will be clear that the first weighing means are preferably specifically suitable for weighing the relatively large weight of the contents of the first collection container 10. The second weighing means are preferably specifically suitable for accurately weighing considerably smaller weights. An accurate composition of the mixture can be obtained in this way.

The first collection container 10 is in fact only a bin with an open top side which is so large that said opening extends below several - in this example two - outflow openings of different stock containers. The second collection container 15 is smaller, so that it extends below one outflow opening of a stock container. This configuration means that it is possible simultaneously to make one component flow out of stock container 2 into the first collection container 10 and another component to flow out of stock container 1 into the second collection container 15.

The second collection container 15 is preferably movable relative to the first collection container 10, so that the second collection container 15 can be placed below a desired outflow opening without moving the first collection container 10. In a variant which is not shown, the first collection container could extend below four outflow openings and the second collection container could always extend below two of said outflow openings.

The movement of the second collection container 15 is achieved through the fact that the second collection container 15 can swivel about a swivel shaft 20 situated above the first collection container 10.

The swivel shaft 20 of the second collection container 15 is immovably connected at each end to a supporting bar 21 of a light, but rigid construction situated outside the opening of the first collection container 10. The two load cells 17 by means of which the weight of the contents of the second collection container 15 can be determined are situated between each supporting bar 21 and the frame 11. In a possible variant, the swivel shaft 20 could be fitted on a surround of the opening of the first collection container 10, while the load cells - for example three in number - are placed between the rigid surround and the frame.

In the preferred embodiment shown, the second collection container 15 has two collection compartments 22, 23, each having at the side facing away from the other collection compartment an opening for receiving and delivering a component. An arm 24 connects the two collection compartments 22, 23 to the swivel shaft 20, so that the second collection container 15 can be swivelled between a first receiving position for receiving a component from a first outflow opening, for example from stock container 1, as shown in Figure 1, and a second receiving position for receiving a component from a second outflow opening, for example from stock container 2.

When the collection compartment 22 has been filled with a metered quantity of a component from the stock container 1, the second collection container 15 is swung to the other receiving position below the stock container 2, using means which are not shown here, preferably along the underside of the swivel shaft 20, then the contents of a collection compartment 22 then fall into the first collection container 10 during the swivelling movement. If the swivelling movement is made at sufficient speed, the contents are strewn over the material already present in the first collection container 10, which can be advantageous for achieving a uniform distribution of the component having the smaller weight percentage in the mixture.

The drawing does not show that the frame 11 is connected to drive means which enable movement of the frame 11 along the rails 12. Together with the control device 9, these drive means can form part of a control unit which permits fully automatic operation of the device.

The first collection container 10 is provided on the underside with an outflow opening which can be shut off by a valve 30, for discharging the mixture obtained.

It will be clear that the number of stock containers can be different from what is shown here and can also be placed in a different arrangement, for example in two parallel rows. In that case an advantageous embodiment is that in which the first collection container extends below two stock containers of each row, thus in total below four stock containers, and the second collection container extends below two of those four stock containers. An X-Y displacement mechanism can also be provided, for example by fitting the rails 12 in such a way that they in turn are movable on rails extending at right angles thereto.

In an embodiment not shown in the drawing the device is provided with air suction means, said air suction means comprising air intake openings distributed around the opening of the first collection container. Preferably the air intake openings are arranged to suck in air from outside the first collection container thereby creating a screen of flowing air which carries along dust escaping from the opening of the first collection container. When a volume of a component is fed into the first collection container an equal volume of air has to escape from this container. With the escaping air dust will try to escape from the container which has to be prevented. By providing a screen of flowing air around the top opening of the first collection container the dust will not pass this air screen. It is important that the air for forming the screen is not coming from inside the first collection container but from the outside. Sucking in the air from inside the container would have as unwanted effect that more dust or even metered fine components are removed from this container and also the accuracy of the second weighing means could be impaired.

In an embodiment not shown in the drawing each stock container is provided with a cover plate extending essentially above the first collection container when said first collection container is positioned under the stock container, the first collection container being provided with brushes arranged around the opening of the first collection container, said brushes wiping over the underside of the cover plate when the first collection container passes under the stock container. The cover plate reduce the escape of dust from the first collection container. Preferably the brushes are located inside the ring of air intake openings, and the brushes are spaced apart so that air and dust can escape from the first collection container but is then removed by the screen of air.

## Claims

1. Device for gravimetric metering of a mixture of multiple components, comprising:
multiple stock containers (1-4), each for accommodating one of the components, each stock container having a controllable outflow opening (5-8) for delivering a metered quantity of the component concerned,
a first collection container (10), situated below the outflow openings of one or more stock containers, for receiving components from the stock containers, and first weighing means (13, 14), for determining the weight of the contents of the first collection container, a second collection container (15) being situated above the first collection container (10) and being designed for delivering the contents of the second collection container to the first collection container, and second weighing means (17, 18) for determining the weight of the contents of the second collection container, **characterized in that** the second collection container (15) is movable below the outflow openings of the stock containers.

2. Device according to claim 1, in which the first collection container (10) is movable below the outflow openings (5-8) of the stock containers (1-4).

3. Device according to claim 2, in which the first collection container (10) and the second collection container (15) are accommodated in a common frame (11), which is movable below the outflow openings of the stock containers.

4. Device according to claim 3, in which the first collection container (10) is supported by the first weighing means (13) on the frame (11), and in which the second collection container (15) is supported by the second weighing means (17) on the frame (11).

5. Device according to one or more of the preceding claims, in which the first collection container (10) is designed so that it extends below several outflow openings of different stock containers, and in which the second collection container (15) is designed so that it extends below a smaller number of outflow openings than the first collection container (10), the second collection container being movable relative to the first collection container, so that the second collection container can be placed below a desired outflow opening without moving the first collection container.

6. Device according to one or more of the preceding claims, in which the second collection container (15) can swivel about a swivel shaft (20) situated above the first collection container (10), between a receiving position for receiving a component from an outflow opening of a stock container and a delivery position for delivering the contents of the second collection container to the first collection container.

7. Device according to one or more of the preceding claims, in which the second collection container (15) can be swivelled about a swivel shaft (20) situated above the first collection container, the second collection container having two collection compartments (22, 23), each having at the side facing away from the other collection compartment an opening for receiving and delivering a component, while an arm (24) connects the second collection container to the swivel shaft (20), so that the second collection container can be swivelled between a first receiving position for receiving a component from a first outflow opening and a second receiving position for receiving a component from a second outflow opening, and the contents of a collection compartment are delivered to the first collection container during the swivelling from one receiving position to the other receiving position.

8. Device according to claim 7, in which the swivel shaft (20) of the second collection container (15) is immovably connected to a supporting element (21) extending outside the opening of the first collection container (10), while the second weighing means are placed between the supporting element (21) and the frame (11).

9. Device according to one or more of the preceding claims, in which air suction means are provided, said air suction means comprising air intake openings distributed around the opening of the first collection container.

10. Device according to claim 9, in which the air intake openings are arranged to suck in air from outside the first collection container thereby creating a screen of flowing air which carries along dust escaping from the opening of the first collection container.

11. Device according to one or more of the preceding claims, in which each stock container is provided with a cover plate extending essentially above the first collection container when said first collection container is positioned under the stock container, the first collection container being provided with brushes arranged around the opening of the first collection container, said brushes wiping over the underside of the cover plate when the first collection container passes under the stock container.

12. Device according to claims 11, in which the brushes are located inside the ring of air intake openings, and in which the brushes are spaced apart so that air and dust can escape from the first collection container.

## Patentansprüche

1. Vorrichtung zur gravimetrischen Dosierung eines Gemisches von mehreren Komponenten, umfassend:
mehrere Vorratsbehälter (1-4), von denen jeder zum Aufnehmen einer einzelnen Komponente der Komponenten dient, wobei jeder Vorratsbehälter eine steuerbare Ausfließöffnung (5-8) zum Abgeben einer dosierten Menge der betreffenden Komponente dient;
einen ersten Sammelbehälter (10), der unter der Ausfließöffnung einer oder mehrerer Vorratsbehälter plaziert ist, zum Aufnehmen von Komponenten aus den Vorratsbehältern; und
eine erste Wiegevorrichtung (13, 14) zum Bestimmen des Gewichts des Inhalts des ersten Sammelbehälters, wobei ein zweiter Sammelbehälter (15) über dem ersten Sammelbehälter (10) plaziert und zum Abgeben des Inhalts des zweiten Sammelbehälters an den ersten Sammelbehälter gestaltet ist; und
eine zweite Wiegevorrichtung (17, 18) zum Bestimmen des Gewichtes des Inhaltes des zweiten Sammelbehälters,
**dadurch gekennzeichnet, daß**
der zweite Sammelbehälter (15) unter die Ausfließöffnungen der Vorratsbehälter bewegbar ist.

2. Vorrichtung nach Anspruch 1, bei welcher der erste Sammelbehälter (10) unter die Ausfließöffnungen (5-8) der Vorratsbehälter (1-4) bewegbar ist.

3. Vorrichtung nach Anspruch 2, bei welcher der erste Sammelbehälter (10) und der zweite Sammelbehälter (15) in einem gemeinsamen Gestell (11) untergebracht sind, das unter die Ausfließöffnungen der Vorratsbehälter bewegbar ist.

4. Vorrichtung nach Anspruch 3, bei welcher der erste Sammelbehälter (10) von der ersten Wiegevorrichtung (13) auf dem Gestell (11) getragen wird, und bei welcher der zweite Sammelbehälter (15) von der zweiten Wiegevorrichtung (17) auf dem Gestell (11) getragen wird.

5. Vorrichtung nach einem oder mehreren der vorhergehenden Ansprüche, bei der der erste Sammelbehälter (10) so gestaltet ist, daß er sich unter mehrere Ausfließöffnungen unterschiedlicher Vorratsbehälter erstreckt, und bei welcher der zweite Sammelbehälter (15) so gestaltet ist, daß er sich unter eine kleinere Anzahl von Ausfließöffnungen erstreckt als der erste Sammelbehälter (10), wobei der zweite Sammelbehälter relativ zum ersten Sammelbehälter bewegbar ist, derart, daß der zweite Sammelbehälter unter einer gewünschten Ausfließöffnung ohne Bewegen des ersten Sammelbehälters plaziert werden kann.

6. Vorrichtung nach einem oder mehreren der vorhergehenden Ansprüche, bei welcher der zweite Sammelbehälter (15) um eine Drehachse (20), die über dem ersten Sammelbehälter (10) angeordnet ist, zwischen einer Aufnahmeposition zum Aufnehmen einer Komponente aus einer Aüstließöffnung eines Vorratsbehälters und einer Abgabeposition zum Abgeben des Inhalts des zweiten Sammelbehälters an den ersten Sammelbehälter schwenken kann.

7. Vorrichtung nach einem oder mehreren der vorhergehenden Ansprüche, bei der der zweite Sammelbehälter (15) um eine Drehachse (20) geschwenkt werden kann, die über dem ersten Sammelbehälter plaziert ist, wobei der zweite Sammelbehälter zwei Sammelfächer (22, 23) aufweist, von denen jedes an der von dem anderen Sammelfach wegweisenden Seite eine Öffnung zum Aufnehmen und Abgeben einer Komponente aufweist, wobei ein Arm (24) den zweiten Sammelbehälter an die Drehachse (20) anschließt, so daß der zweite Sammelbehälter zwischen einer ersten Aufnahmeposition zum Aufnehmen einer, von einer ersten Ausfließöffnung kommenden Komponente, und einer zweiten Aufnahmeposition zum Aufnehmen einer, von einer zweiten Ausfließöffnung kommenden Komponente geschwenkt werden kann, und daß der Inhalt eines Sammelfaches während des Schwenkens von der einen aufnehmenden Position zu der anderen aufnehmenden Position an den ersten Sammelbehälter abgegeben wird.

8. Vorrichtung nach Anspruch 7, bei der die Drehachse (20) des zweiten Sammelbehälters (15) unbeweglich an einem Tragelement (21) befestigt ist, das sich außerhalb der Öffnung des ersten Sammelbehälters (10) erstreckt, während die zweite Wiegevorrichtung zwischen dem Tragelement (21) und dem Gestell (11) plaziert ist.

9. Vorrichtung nach einem oder mehreren der vorhergehenden Ansprüche, bei der Luftansaugeinrichtungen vorgesehen sind, wobei die Luftansaugeinrichtungen Lufteinlaßöffnungen umfassen, die um die Öffnung des ersten Sammelbehälters herum verteilt sind.

10. Vorrichtung nach Anspruch 9, bei der die Lufteinlaßöffnungen derart angeordnet sind, daß sie Luft außerhalb des ersten Sammelbehälters ansaugen, wodurch ein Schirm strömender Luft erzeugt wird der Staub mit sich führt, welcher aus der Öffnung des ersten Sammelbehälters entweicht.

11. Vorrichtung nach einem oder mehreren der vorhergehenden Ansprüche, bei der jeder Vorratsbehälter mit einer Abdeckplatte versehen ist, die sich im wesentlichen über dem ersten Sammelbehälter erstreckt, wenn der erste Sammelbehälter unter dem Vorratsbehälter positioniert ist, wobei der erste Sammelbehälter mit Bürsten versehen ist, die um die Öffnung des ersten Sammelbehälters herum angeordnet sind, wobei die Bürsten über die Unterseite der Abdeckplatte wischen, wenn der erste Sammelbehälter sich unter den Vorratsbehälter schiebt.

12. Vorrichtung nach Anspruch 11, bei der die Bürsten innerhalb des Rings von Lufteinlaßöffnungen plaziert sind, und bei der die Bürsten so voneinander beabstandet sind, daß Luft und Staub aus dem ersten Sammelbehälter entweichen kann.

## Revendications

1. Dispositif pour doser par mesure gravimétrique un mélange de composants multiples, comprenant:
de multiples conteneurs de stockage (1 - 4), pour loger un des composants dans chacun d'entre eux, chaque conteneur de stockage présentant une ouverture de décharge commandée (5 - 8) pour délivrer une quantité dosée du composant concerné,
un premier conteneur de récupération (10), situé sous les ouvertures de décharge d'un ou de plusieurs conteneurs de stockage, pour recevoir les composants provenant des conteneurs de stockage, et
un premier moyen de pesée (13, 14), pour déterminer le poids du contenu du premier conteneur de récupération,
un second conteneur de récupération (15), situé au-dessus du premier conteneur de récupération (10) et conçu pour décharger le contenu de ce second conteneur de récupération dans le premier conteneur de récupération, et
un second moyen de pesée (17, 18) pour déterminer le poids du contenu du second conteneur de récupération,
caractérisé en ce que le second conteneur de récupération (15) est mobile sous les ouvertures de décharge des conteneurs de stockage.

2. Dispositif selon la revendication 1, dans lequel le premier conteneur de récupération (10) est mobile sous les ouvertures de décharge (5 - 8) des conteneurs de stockage (1 - 4).

3. Dispositif selon la revendication 2, dans lequel le premier conteneur de récupération (10) et le second conteneur de récupération (15) sont logés dans le même châssis (11), qui est mobile sous les ouvertures de décharge des conteneurs de stockage.

4. Dispositif selon la revendication 3, dans lequel le premier conteneur de récupération (10) est supporté par le premier moyen de pesée (13) sur le châssis (11), et dans lequel le second conteneur de récupération (15) est supporté par le second moyen de pesée (17) sur le châssis (11).

5. Dispositif selon une ou plusieurs des revendications précédentes, dans lequel le premier conteneur de récupération (10) est conçu de sorte qu'il s'étende sous plusieurs ouvertures de décharge de différents conteneurs de stockage, et dans lequel le second conteneur de récupération (15) est conçu de sorte qu'il s'étende sous un plus petit nombre d'ouvertures de décharge que le premier, le second conteneur de récupération étant mobile par rapport au premier, de sorte que le second conteneur de récupération peut être placé sous une ouverture de décharge désirée sans déplacer le premier conteneur de récupération.

6. Dispositif selon une ou plusieurs des revendications précédentes, dans lequel le second conteneur de récupération (15) peut pivoter autour d'un arbre de pivotement (20), situé au-dessus du premier conteneur de récupération (10), entre une position de réception pour recevoir un composant provenant d'une ouverture de décharge d'un conteneur de stockage et une position de décharge pour décharger le contenu de ce second conteneur de récupération dans le premier conteneur de récupération.

7. Dispositif selon une ou plusieurs des revendications précédentes, dans lequel le second conteneur de récupération (15) peut pivoter autour d'un arbre de pivotement (20) situé au-dessus du premier conteneur de récupération, le second conteneur de récupération présentant deux compartiments de récupération (22, 23), ayant chacun, du côté éloigné de l'autre compartiment de récupération, une ouverture pour recevoir et décharger un composant, tandis qu'un bras (24) relie le second conteneur de récupération à l'arbre de pivotement (20), de sorte que le second conteneur de récupération peut pivoter entre une première position de réception pour recevoir un composant provenant d'une première ouverture de décharge et une seconde position de réception pour recevoir un composant provenant d'une seconde ouverture de décharge, et le contenu du compartiment de récupération est déchargé dans le premier conteneur de récupération pendant le pivotement depuis une position de réception à l'autre position de réception.

8. Dispositif selon la revendication 7, dans lequel l'arbre de pivotement (20) du second conteneur de récupération (15) est relié de façon fixe à un élément de support (21) s'étendant à l'extérieur de l'ouverture du premier conteneur de récupération (10), alors que le second moyen de pesée est placé entre l'élément de support (21) et le châssis (11).

9. Dispositif selon une ou plusieurs des revendications précédentes, dans lequel un moyen d'aspiration d'air est prévu, ledit moyen d'aspiration d'air comprenant des ouvertures de prise d'air distribuées autour de l'ouverture du premier conteneur de récupération.

10. Dispositif selon la revendication 9, dans lequel les ouvertures de prise d'air sont disposées pour aspirer l'air de l'extérieur du premier conteneur de récupération, créant ainsi un écran d'air en circulation qui entraîne la poussière s'échappant de l'ouverture du premier conteneur de récupération.

11. Dispositif selon une ou plusieurs des revendications précédentes, dans lequel chaque conteneur de stockage est équipé d'une plaque de couverture s'étendant essentiellement au-dessus du premier conteneur de récupération lorsque ledit premier conteneur de récupération est placé sous le conteneur de stockage, le premier conteneur de récupération étant équipé de brosses, disposées autour de l'ouverture du premier conteneur de récupération, lesdites brosses essuyant le dessous de la plaque de couverture lorsque le premier conteneur de récupération passe sous le conteneur de stockage.

12. Dispositif selon la revendication 11, dans lequel les brosses sont situées à l'intérieur de l'anneau des ouvertures de prise d'air, et dans lequel les brosses sont espacées de sorte que l'air et la poussière peuvent s'échapper du premier conteneur de récupération.
